Europäisches Patentamt

European Patent Office

Office européen des brevets

(19)

(11) Publication number: **0 094 112**
A1

(12) **EUROPEAN PATENT APPLICATION**

(21) Application number: **83200511.0**

(22) Date of filing: **12.04.83**

(51) Int. Cl.³: **A 23 J 3/00,** A 23 L 1/31

(30) Priority: **22.04.82 US 370805**
**30.03.83 US 478121**

(43) Date of publication of application: **16.11.83**
**Bulletin 83/46**

(84) Designated Contracting States: **BE DE FR GB IT NL**

(71) Applicant: **THE PROCTER & GAMBLE COMPANY,**
**301 East Sixth Street, Cincinnati Ohio 45201 (US)**

(72) Inventor: **Sisson, James Bryant, 2010 Rolling Hills Blvd.,**
**Fairfield, OH 45014 (US)**
Inventor: **Liepa, Alexander Leon, 9905 Tradewind Ct.,**
**Cincinnati, OH 45242 (US)**
Inventor: **Hart, John Michael, 9945 Fernhaven Ct.,**
**Cincinnati, OH 45239 (US)**

(74) Representative: **Suslic, Lydia et al, Procter & Gamble**
**European Technical Center Temselaan 100,**
**B-1820 Strombeek-Bever (BE)**

(54) **Meat analog products having texture diversity.**

(57) The organoleptic acceptability of textured protein materials simulating loose, cooked ground meat is desirably improved by processing which enhances the textural diversity of the material. This process involves agglomerating textured protein materials with a heat-settable binder and heat-setting the agglomerate. The heat-setting is preferably accomplished by frying the agglomerate.

EP 0 094 112 A1

0094112

# MEAT ANALOG PRODUCTS HAVING TEXTURE DIVERSITY

James B. Sisson

Alexander L. Liepa

John M. Hart

## Technical Field

This invention relates to meat analog products, specifically, textured protein materials which simulate loose, cooked ground meat.

## Background of the Invention

Textured protein materials which simulate meat, or, simply, "meat analogs", are well known to the art, having been available for several decades. The plethora of issued patents in this area attests to the considerable technology involved in making meat analogs. Nonetheless, few successful consumer products have appeared because these meat analogs, while high in technology, have been low in consumer acceptability. That is, most of the effort in this field has been directed to developing technological leads, rather than to meeting existing, identifiable consumer needs and desires.

U.S. 3,962,335, issued June 8, 1976, to S. Kumar and assigned to The Quaker Oats Company, describes a textured protein product prepared by precipitating vegetable or animal protein from a protein slurry, shaping the recovered protein and heating the shaped protein in a liquid hydrophobic medium.

U.S. 4,000,323, 4,052,517 and 4,061,784, all issued in 1976 and 1977 to Youngquist and assigned to The Procter & Gamble Company, describe preparation of shaped textured protein food products. The examples describe shaping and frying of hamburger patty analogs.

None of these prior art patents address the problem of supplying texture diversity in a meat analog simulating loose cooked ground meat, i.e. a substantially particulate analog.

It is an object of this invention to provide a meat analog product which, by virtue of its processing, is significantly preferred by consumers.

It is an object of this invention to provide a meat analog product which is significantly preferred by consumers by virtue of its texture diversity.

It is an object of this invention to provide a meat analog product which, by virtue of its processing, has significantly preferred textural diversity.

These and other objects of the invention will be evident from the following disclosure.

### Brief Description of the Drawings

Figure 1 is a side elevation of the particle texture die used in texture testing in accordance with this invention.

Figure 2 is a cross section of the particle texture die taken through 2-2 of Figure 1.

Figure 3 is a bottom plan view of the particle texture die.

Figure 4 is a top plan view of the target plate used in conjunction with the particle texture die in texture testing.

Figure 5 is a cross section of the target plate taken through 5-5 of Figure 4.

All the figures are 2 times actual size.

### Disclosure of the Invention

This invention provides a textured protein meat analog product having superior texture. In particular, the superior texture is attributable to processing which provides significant textural diversity to the finished meat analog product. As a result, the meat analog product varies in tenderness or toughness from particle to particle, as does real meat. This characteristic not only aids the meat analog product of this invention in simulating natural meat, it also satisfies consumers' subliminal need for variety and heterogeneity in foods, and helps eliminate the organoleptic monotony involved in consuming food which is too uniform in flavor, color, size, texture, etc.

The analogs of this invention are particularly suitable for incorporation in a variety of common sauces as substitutes for loose-cooked ground meat. In this manner, for example, analog-containing spaghetti, barbecue, stroganoff, chili and taco sauces can be prepared. The preferred texture of the analogs of this invention can still be measured when the particles are removed from the sauce.

The terms "meat analog" and "textured protein" simulating loose cooked ground meat are intended to include textured protein materials, well known to the art. The terms include mixtures of textured vegetable protein materials with up to 70%, but preferably less than 50%, of materials of animal origin, including egg albumen, meat, meat juices, serum, blood, meat by-products, hydrolyzed animal protein, and the like. Textural protein materials from other than vegetable sources, such as single cell proteins and keratin can also be used herein.

The textured protein meat analogs of this invention are characterized by a particle texture diversity of at least about 65%, preferably from about 70% to about 100%, most preferably from about 75% to about 85%. It has been determined that analogs having a particle texture diversity of 65% or greater are significantly preferred to otherwise essentially identical analogs having lesser particle texture diversity.

The actual mean texture is relatively unimportant in the context of this invention. While the texture of the analog should be developed to simulate - or improve upon - the texture of the meat being simulated, the mean texture can be anywhere within the range familiar to the art, so long as the texture diversity is at least 65%. Such textures generally range from about 0.5 kg to about 3 kg, and preferably 1 to 2, as determined hereinafter.

When analog particles prepared in accordance with this invention are sorted according to texture by the techniques described herein, the particles having a texture greater than the mean have a texture, on average, about two times as tough as the mean texture of those particles having textures less than the mean. It has been found that the texture of a 1:1 mixture of tough and tender particles is superior in preference to either group individually.

### Detailed Description of the Drawings

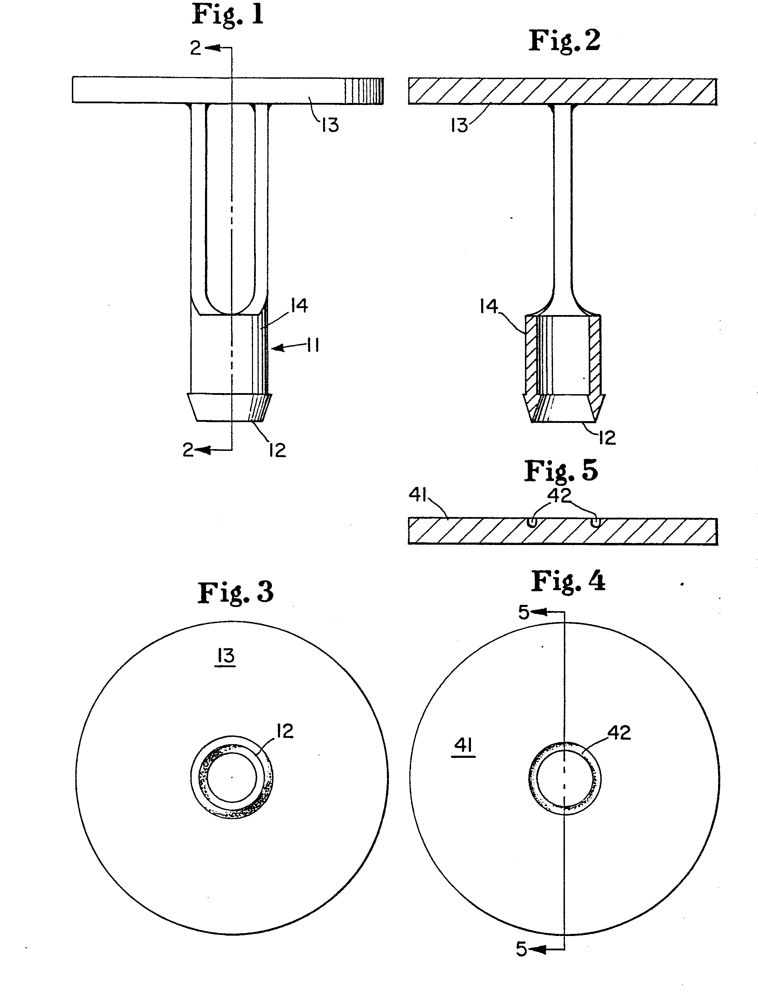

Figure 1 illustrates the particle texture die used herein for texture testing. This die is intended to overcome the deficiencies of the blade commonly used in the Warner-Bratzler shear test for texture testing of large cuts of meat, such as steaks. The die is designed to be self-centering while cutting through a small particle of meat, as is commonly found in loose cooked ground meat, and analogs thereof.

The die is a single unit consisting of a base plate 13, to which is rigidly mounted a cylindrical punch 11, consisting of a hollow tube 14 having a knife edge 12 which pierces and cuts the analog particle during the texture testing. Preferably, the base plate 13 is a disc of stainless steel 3.18 mm. thick and 38 mm. in diameter.

Coaxially attached thereto is the punch 11, 1.59 mm. thick and 35 mm. in length from base plate 13 to knife edge 12, and also preferably of tubular stainless steel. The punch tube 14 has an outer diameter of 9.652 mm. and an inner diameter of 6.35 mm., while the knife edge 12 has an inner diameter of 5.842 mm. and an outer diameter of 10.16 mm. at its widest point. The knife edge 12 is a portion of the tube 14, 3.18 mm. in length and tapering at an angle of 40°, i.e., 20° from the longitudinal axis of the punch 11 on both inner and outer aspects from the aforementioned inner and outer diameters to a circle 8 mm. in diameter. The punch 11 as illustrated is fenestrated on opposite sides along the 25 mm. proximal to the base plate 13, to facilitate cleaning. Dimensions of the fenestrations are not critical so long as structural strength of the die is maintained.

In use the die is attached to a strain gauge and directed downward through the particle being tested, which rests on the target plate 41 illustrated in Figures 4 and 5. Like the base plate 13, the target plate 41 is also a 38 mm. disc of 3.18 mm.

stainless steel, and is machined to provide a target ring 42, an annular depression coaxial with the center of the disc. The target ring 42 is 0.889 mm. deep and has inner and outer diameters of 7.67 and 8.18 mm., respectively.

### Particle Texture Testing

Preliminary to measurement of particle textures, the particles, if they are combined with sauce, must be removed from the sauce. Removal can be accomplished by the following method.

A 1000 ml. quantity of sauce is divided into two portions. Each portion is treated by placing it in a 1500 ml. container which is then filled with a broken stream of warm water (about 45°C). The container is sealed and inverted gently about 15 times, one time per second, to insure mixing. The resulting slurry is poured through a clean 2.00 mm. screen. the container is rinsed with another 175 ml. of water, which is also poured onto a clean area of the screen. The screen is tapped gently by hand to remove water and sauce and emptied onto a clean pan. The resulting analog from both portions of sauce is placed in a 1000 ml. container, which is filled with warm water, sealed, and mixed by inverting the container 10 times as above. The resulting slurry is poured through a clean 2.00 mm. screen which is again gently tapped to remove free water and sauce.

This latter wash-and-screen process is repeated two more times, and then the screen is gently tapped by hand for about 15 seconds to remove water and to level the analog on the screen. The screen is allowed to drain undisturbed for approximately 3 minutes, after which the bottom of the screen is blotted with towels, pressed firmly against the screen, until the towels come away dry.

The analog is poured, over a period of about 10 seconds, on a stack of standard screens in descending order of opening size: 16 mm., 12.7 mm., 9.51 mm. and base, mounted on a mechanical shaker, while the screens are shaking. A Tyler Model RX24 portable sieve shaker is preferably used. Thirty seconds after the start of pouring, the shaker is stopped, and the screens and base are removed. The analog is then ready for texture testing.

Wet analog particles from the 12.7 mm. and 9.51 mm. size classes are removed from the screens and stored, if necessary, in sealed containers at 23°C. Each particle is removed and centered on the target plate 41 shown in Figure 4 so that the entire target ring 42 is covered when viewed from above. The particle texture die shown in Figure 1 is mounted on a 2000 - 5000 gm capacity strain gauge in any desired constant speed stress-strain analyzer with the knife edge 12 located 19.8 mm. above the target plate 41 and centered over the target ring 42. The die is pressed through the particle at a speed of 10 mm. per minute for a distance of 20 mm. The peak load measured during the test is recorded, and is considered a measure of the toughness or tenderness of the particle. This is comparable to the techniques used in the Warner-Bratzler shear test.

The peak loads from all the particles in the sample, no less than 30 particles in any case, are averaged to provide an arithmetic mean peak load or average toughness. The standard deviation of the particle textures is calculated by standard statistical techniques. Four times this standard deviation value is divided by the mean. (4 x Std. Dev./Mean). The resulting fraction is multiplied by 100 to give the particle texture diversity percentage. Thus, if a given sample has a mean texture (peak force) of 1.6 kg. and a standard deviation of 0.3 kg., the particle texture diversity is (4 x 0.3/1.6) x 100 = (1.2/1.6) x 100 = 75%, and the sample falls within the scope of this invention. Similarly, if a sample as a mean peak force of I.5 kg. and a standard deviation of 0.2 kg., the particle texture diversity is 53.3%, and the sample falls outside the scope of this invention.

## Processing

In a preferred process of this invention, a meat analog is prepared by 1) extrusion cooking a vegetable protein concentrate, e.g. soybean protein, to make an extrudate, and 2) comminution of the extrudate to resemble small chunks of ground meat. Other extrudates, bundles of protein fibers or textured sheeted proteins can be used. At this point, the extrudate is preferably subjected to an agglomeration process, in which large meat analog particles are made from smaller ones by mixing or coating the smaller particles with any of the variety of proteinaceous binders known to the art, along with colors and flavors, if desired, and then heat-setting the binder. These binders include egg white, soy protein fractions, cottonseed proteins and the like. In the practice of this invention, the heat setting step is accomplished by process means which involve non-uniform time and temperature treatment of the analog. It is this time and temperature variability in the heat setting step which introduces the desired texture variability in the finished product.

The textural diversity of this invention can be introduced into the analog by several methods of heat setting the binder used to agglomerate the smaller particles of textured protein. These processes can be either batch or continuous methods. Typical batch methods include skillet and grill frying of the agglomerate. Continuous frying methods can include techniques whereby analog is distributed along an endless belt which is immersed in heated frying oil for at least a portion of its travel, prior to removal of the fried analog particles. Both continuous- and batch-fried analogs can be made with significant texture diversity, i.e. greater than 65%. Continuous techniques can also be used to prepare analogs having substantially uniform texture. In the case of batch-fried analog, this derives from differences in surface temperature at various points on the frying surface and in the frying fat, based on distance from the underlying heating element/burner. Batch frying temperatures start at 127°C and drop thereafter, due to evaporative cooling, to as low as 104°C. In continuous frying, diversity is obtained, for example, by the process of frying a stream of particles of random size, which, when immersion-fried in fat at a temperature in the range of from 104° to 132°C, cook to different degrees, and to different levels of binder setting, depending upon their relative surface-area-to-volume ratio. However, one skilled in the art can readily appreciate that other cooking techniques such as baking, heating with microwave or radiant heat, can be used to provide analogs having the texture diversity claimed herein. Mixtures of particles having different textures can also be used to achieve textural diversity of the analog.

## Example 1

A soy protein concentrate, Procon 2000, manufactured by the A. E. Staley Company, is mixed with water to a moisture level of about 40% and worked to a dough in a Werner & Pfleiderer twin screw extruder in a manner so that strands of extrudate are formed. The dough temperature immediately prior to exit from the extruder is 165°C and the pressure is about 500 psig. As the strands of dough exit from the extruder die, they are expanded somewhat by release of steam to a diameter of about 6 mm. The extrudate strands are cut into lengths of about 2 cm by a rotary shear. The pieces are air conveyed to a knife impact mill with 16 blades rotating at a tip velocity of about 48 m/sec. Particles are sheared and reduced in size as they impact against a plate perforated with 3/8" square openings at the mill discharge.

This particulate extrudate is mixed with dry flavorants and then hydrated with water at 190°F. The resulting slurry is cooled to about 120°F, mixed with eggwhite binder until the mixture is homogeneous and little free liquid is apparent. The finished slurry containing by weight about 70% water, 2.2% eggwhite solids, 3.8% flavorants and the remainder extrudate solids is fried in a Teflon-coated 1250 watt square electric skillet.

The skillet contains about 500 grams of fat at 127°C sufficient to cover an evenly distributed mat of slurry at the beginning of frying. The mat, formed as the binder in the slurry coagulates, is broken up and inverted in place during a frying period of about 6 minutes. The analog pieces over the heating element are well browned (more thoroughly cooked), while those at the edges and corners are light in color (less cooked).

This analog is cooked in a tomato sauce at pH 4.1-4.6 for 90 minutes and cooled overnight in sealed jars. The particles of analog are separated from the sauce and tested as described herein. Results are as follows:

| | |
|---|---|
| Mean Peak Force | 1.53 Kg |
| Std. Dev. | .294 Kg |
| Diversity | 77% |

## Example 2

A soy protein analog prepared as in Example 1 is mixed with tomato sauce and passed through a scraped wall heat exchanger in which it reaches a temperature of 250°F. It is cooled to about 190°F, poured into jars which are hermetically sealed, cooled and stored.

After storage for 5 months at 40°F, 114 pieces of analog from the jars are separated and tested as described herein with these results:

| Mean Peak Force | 1.46 Kg |
|---|---|
| Std. Dev. | 0.329 Kg |
| Diversity | 90% |

## Example 3

A slurry is prepared as in Example 1 which is then formed on a moving continuous belt as a layer about ½ inch thick and about 10 inches wide. This layer is dropped a short distance onto a mesh belt traveling somewhat faster than the forming belt so that partially separated lumps of slurry of various sizes are formed. The moving mesh belt is immersed in the vat of a continuous fryer manufactured by HEAT & CONTROL INC. which contains fat controlled at 130°C. Immersion of the mat is maintained by an upper second belt of like design conveyed at the same speed as the lower belt. The space between the belts is larger than the thickness of the mat.

The analog is fried for about 3.5 minutes. The analog exiting from the fryer is in pieces of various sizes and thicknesses the smaller of which, particularly those at the edges of the mat, are browner and chewier than the larger pieces.

This analog is then drained free of excess fat, cooled in containers and processed with tomato sauce as in Example 2.

After storage for about 4 months at 40°F, jars of the mixture are opened and the analog is separated and tested in the same manner as Examples 1 and 2. There are 171 pieces of

-10-

analog retained on the 12.7 and 9.51 mm screens. The results are as follows:

| | |
|---|---|
| Mean Peak Force | 1.25 Kg |
| Std. Dev. | 0.264 Kg. |
| Diversity | 84% |

CLAIMS

1. A meat analog characterized by a particle texture diversity of at least about 65%.

2. An analog according to Claim 1 and characterized by particle texture diversity of from about 70% to about 100%.

3. An analog according to Claim 2 and characterized by a particle texture diversity of from about 75% to about 85%.

4. An analog according to Claim 1 and further characterized in having a mean particle texture of from about 1 to about 2 kg.

5. An analog according to Claim 1 which comprises a textured vegetable protein.

6. An analog according to Claim 5 wherein the textured vegetable protein is agglomerated with an egg white binder.

7. An analog according to Claim 1 which comprises less than 50% of materials of animal origin.

8. A process for forming a meat analog characterized by a particle texture diversity of at least 65% comprising the steps of:
   (1) agglomerating textured protein particles with a heat-settable binder; and
   (2) heat-setting the binder under conditions of non-uniform heating.

9. A process according to Claim 8 wherein the meat analog is made from textured vegetable protein.

10. A process according to Claim 9 wherein the heat-settable binder is egg white.

RAD/db
[2984R]

**Fig. 1**

13

14

11

2

2

12

**Fig. 2**

13

14

12

**Fig. 5**

41

42

**Fig. 3**

13

12

**Fig. 4**

5

41

42

5

## European Patent Office

## EUROPEAN SEARCH REPORT

### DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| D,A | US-A-4 061 784 (R.W. YOUNGQUIST) * Claims 1-4 * | | A 23 J 3/00<br>A 23 L 1/31 |
| D,A | US-A-4 000 323 (R.W. YOUNGQUIST) * Claims 1, 2 * | | |
| A | GB-A-1 511 835 (BRITISH PETROLEUM CO.) * Claim 1 * | | |

TECHNICAL FIELDS
SEARCHED (Int. Cl. 3)

A 23 J 3/00
A 23 L 1/00

The present search report has been drawn up for all claims

| Place of search<br>BERLIN | Date of completion of the search<br>06-07-1983 | Examiner<br>SCHULTZE D |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82